# EUROPÄISCHE PATENTSCHRIFT

(11) **EP 2 568 582 B1**
(45) Veröffentlichungstag und Bekanntmachung des Hinweises auf die Patenterteilung: **04.06.2014**
(21) Anmeldenummer: 11180855.6
(22) Anmeldetag: 12.09.2011
(51) Int. Cl.: G01B 7/14, H02K 41/02, H02K 11/00, G01D 5/24

(54) **Elektrische Maschine**
Electric machine
Machine électrique

(43) Veröffentlichungstag der Anmeldung: 13.03.2013
(73) Patentinhaber: Siemens Aktiengesellschaft, 80333 München (DE)
(72) Erfinder: Finkler, Roland, 91058 Erlangen (DE)

(56) Entgegenhaltungen:
- WO-A1-03/105324
- WO-A1-2007/033888
- JP-A- 5 079 806
- US-A1- 2007 290 638

## Beschreibung

Die vorliegende Erfindung betrifft eine elektrische Maschine. Über dies betrifft die vorliegende Erfindung ein Verfahren zum Bestimmen einer Position eines ersten Aktivteils einer elektrischen Maschine in Bezug zu einem zweiten Aktivteil der elektrischen Maschine.

Bei elektrischen Maschinen kann üblicherweise ein erstes Aktivteil in Bezug zu einem zweiten Aktivteil bewegt werden. Die exakte Bestimmung der Position des ersten Aktivteils in Bezug zu dem zweiten Aktivteil ist sowohl bei rotatorischen elektrischen Maschinen als auch bei Linearmotoren von besonderer Bedeutung. Zum einen kann bei elektrischen Maschinen, die als Drehstrom-Servomotoren ausgeführt sind, bei genauer Kenntnis der Lage des ersten Aktivteils zu dem zweiten Aktivteil das Magnetfeld der elektrischen Maschine besonders effektiv in dem Sinne eingestellt werden, dass zur Erzeugung eines gewünschten Drehmomentes bzw. einer gewünschten Vorschubkraft ein möglichst geringer Gesamtstrom benötigt wird.

Bei elektrischen Maschinen, die als Linearmotor ausgebildet sind, ist ebenso eine genaue Kenntnis der Position eines Primärteils in Bezug zu einem Sekundärteil erforderlich, um eine effektive Linearbewegung des Motors zu ermöglichen. Solche Linearmotoren bzw. Linearantriebe werden üblicherweise in Werkzeugmaschinen oder in Fertigungsanlagen verwendet. Hierbei wird auch üblicherweise eine sehr exakte Positionsregelung benötigt.

Das Dokument JP 5079806 offenbart einen Elektromotor (Drehmotor) der einen kapazitiven Geber um die Position des Rotors zu bestimmen umfasst.

Dokumente US 2007/290638, WO 2007/033888 und WO 03/105324 offenbaren Linearmotoren mit Magnetsensoren.

Die DE 10 2009 041 483 A1 beschreibt ein Messsystem zur Positionsbestimmung längs eines linearen Fahrwegs, insbesondere eines Primärteils eines Linearmotors in Bezug zu einem Sekundärteil des Linearmotors. Hierbei umfasst das Sekundärteil des Linearmotors entsprechende RFID-Tags, die mit einem RFID-

Lesegerät, welches an dem Primärteil des Linearmotors angeordnet ist, erfasst werden können.

Die Aufgabe der vorliegenden Erfindung ist es, eine Position eines ersten Aktivteils einer elektrischen Maschine in Bezug zu einem zweiten Aktivteil der elektrischen Maschine besonders effektiv zu bestimmen.

Diese Aufgabe wird erfindungsgemäß gelöst durch eine elektrische Maschine gemäß Patentanspruch 1. Demnach wird bereitgestellt eine elektrische Maschine mit einem ersten Aktivteil, das eine Mehrzahl von Aktivteilsegmenten umfasst, die in Bewegungsrichtung der elektrischen Maschine hintereinander angeordnet sind, wobei jedes der Aktivteilsegmente eine Positionsgebereinrichtung umfasst, und einem zweiten Aktivteil mit einer Messeinrichtung zum Identifizieren der jeweiligen Positionsgebereinrichtung, wobei jede Positionsgebereinrichtung zumindest eine Positionsgebereinheit umfasst und die zumindest eine Positionsgebereinheit in einem ersten der Aktivteilsegmente eine erste Dielektrizitätskonstante aufweist, und die zumindest eine Positionsgebereinheit in einem zum ersten benachbarten, zweiten Aktivteilsegment eine im Vergleich zur ersten unterschiedliche, zweite Dielektrizitätskonstante aufweist, wobei die Messeinrichtung zumindest eine Messeinheit umfasst, mit der die Dielektrizitätskonstante der jeweiligen Positionsgebereinheit bestimmbar ist.

Erfindungsgemäß umfasst das erste Aktivteil der elektrischen Maschine in jedem Aktivteilsegment eine entsprechende Positionsgebereinrichtung, in der zumindest eine Positionsgebereinheit angeordnet ist. Die jeweilige Positionsgebereinheit kann aus einem entsprechenden Material gebildet sein, das eine definierte Dielektrizitätskonstante bzw. Permittivität (http://de.wikipedia.org/wiki/Permittivität) aufweist. Das zweite Aktivteil der elektrischen Maschine umfasst eine Messeinrichtung mit zumindest einer Messeinheit, mit der die Dielektrizitätskonstanten der jeweiligen Positionsgebereinheiten bestimmt werden können. Zu diesem Zweck kann die Messeinheit zumindest eine Sensoreinrichtung, die ihrerseits beispielsweise als kapazitiver Sensor ausgebildet ist, enthalten. Solche kapazitiven Sensoren enthalten typischerweise zwei Elektroden, wobei die Kapazität zwischen diesen beiden Elektroden durch die sich in der Umgebung befindlichen Medien beeinflusst wird; bei einem in der Nähe befindlichen Körper mit hoher Dielektrizitätskonstante ist diese Kapazität größer als bei einem stattdessen an der gleichen Stelle befindlichen Körper gleicher Form und Größe mit geringerer Dielektrizitätskonstante. Eine solche Messeinheit besitzt den Vorteil, dass mit ihr auf besonders einfache Weise berührungslos durch die Bestimmung der elektrischen Kapazität die Dielektrizitätskonstante der Positionsgebereinheit bestimmt werden kann. Zudem ist die Messeinrichtung einfach aufgebaut und beeinflusst die Funktionalität der elektrischen Maschine nicht.

Bevorzugt umfasst die Messeinrichtung zumindest zwei Messeinheiten, die in Bewegungsrichtung der elektrischen Maschine in einem solchen Abstand zueinander angeordnet sind, dass für jede Lage des ersten Aktivteils in Bezug zu dem zweiten Aktivteil immer zumindest eine der Messeinheiten über einer Positionsgebereinrichtung positioniert ist. Durch diese Anordnung der Messeinheiten kann sichergestellt werden, dass unabhängig von der Position des ersten Aktivteils der elektrischen Maschine zu dem zweiten Aktivteil der elektrischen Maschine mit einer der beiden Messeinheiten immer eine der Positionsgebereinrichtungen identifiziert werden kann.

Gemäß einer Ausführungsform der Erfindung umfasst die Positionsgebereinrichtung zumindest zwei Positionsgebereinheiten, die in Bewegungsrichtung der elektrischen Maschine gesehen auf gleicher Höhe angeordnet sind, und jede Messeinheit umfasst zumindest zwei Sensoreinrichtungen, wobei jeder Positionsgebereinheit eine jeweilige Sensoreinrichtung zugeordnet ist. Üblicherweise umfasst jede Positionsgebereinrichtung mehrere Positionsgebereinheiten, wobei die Materialien der jeweiligen Positionsgebereinheiten unterschiedliche Dielektrizitätskonstanten aufweisen können. Somit kann durch die Verwendung verschiedener Positionsgebereinheiten mit unterschiedlichen Dielektrizitätskonstanten und/oder durch die Anordnung der Positionsgebereinheiten in der Positionsgebereinrichtung eine entsprechende Kodierung ermöglicht werden. Jede Messeinheit umfasst bevorzugt für jede der Positionsgebereinheiten einer Positionsgebereinrichtung eine separate Sensoreinrichtung, mit der die Dielektrizitätskonstante der jeweiligen Positionsgebereinheit bestimmt werden kann. Die einzelnen Sensoreinrichtungen sind bevorzugt so positioniert, dass sie sich beim Positionieren der Messeinheit über der Positionsgebereinrichtung direkt über den jeweiligen Positionsgebereinheiten befinden. Somit kann dann auf besonders einfache Weise die Lage des ersten Aktivteils der elektrischen Maschine in Bezug zu dem zweiten Aktivteil der elektrischen Maschine bestimmt werden. Zu diesem Zweck kann die Messeinrichtung beispielsweise einen entsprechenden Datenspeicher umfassen, in dem die Kodierung der jeweiligen Positionsgebereinrichtung zusammen mit einer entsprechenden Positionsinformation gespeichert ist.

Bei der Verwendung von zwei unterscheidbaren Positionsgebereinheiten mit jeweils unterschiedlichen Dielektrizitätskonstanten, kann die jeweilige Sensoreinrichtung als kapazitiver Sensor so ausgebildet sein, dass sie an ihrem Ausgang eine logische Null erzeugt, wenn sie sich über einer Positionsgebereinheit mit der ersten Dielektrizitätskonstante befindet und eine logische Eins ausgibt, wenn sie sich über Positionsgebereinheit mit der zweiten Dielektrizitätskonstante befindet. Einen solchen kapazitiven Sensor bezeichnet man auch als kapazitiven Näherungsschalter. Auf diese Weise kann auf besonders einfache Weise diejenige Positionsgebereinrichtung identifiziert werden, über welcher sich die Messeinrichtung momentan befindet.

In einer weiteren Ausführungsform weist das erste Aktivteil eine periodische Struktur einer durch Zähne voneinander abgetrennten Nuten auf. Die Positionsgebereinrichtungen sind hier bevorzugt in den Nuten des ersten Aktivteils der elektrischen Maschine angeordnet. Ebenso ist es denkbar, dass die Positionsgebereinrichtungen auf den Zähnen des ersten Aktivteils der elektrischen Maschine positioniert sind. Durch die periodische Struktur des ersten Aktivteils weisen die Abstände der Positionsgebereinrichtungen jeweils den gleichen Abstand zueinander auf. Diese periodische Struktur kann auch zur Bestimmung der Position des ersten Aktivteils in Bezug zu dem zweiten Aktivteil genutzt werden.

In einer bevorzugten Ausführungsform umfasst die Messeinrichtung eine erste Inkrementalmesseinrichtung zur Positionsbestimmung des ersten Aktivteils in Bezug zu dem zweiten Aktivteil. Die Inkrementalmesseinrichtung kann nach dem Zahnradgeberprinzip oder nach Art eines Reluktanzresolvers ausgebildet sein. Eine solche Inkrementalmesseinrichtung ist in der DE 10 2009 041 483 A1 (unter der Bezeichnung "Inkrementalmesssystem") beschrieben. Durch die Verwendung einer solchen Inkrementalmesseinrichtung kann eine genauere Positionsbestimmung des ersten Aktivteils in Bezug zu dem zweiten Aktivteil ermöglicht werden.

In einer Ausführungsform umfasst die erste Inkrementalmesseinrichtung zumindest zwei als kapazitive Sensoren mit analogen Ausgangssignalen ausgeführte Inkrementalmesseinheiten, die in Bewegungsrichtung der elektrischen Maschine einen Abstand zueinander aufweisen, der einem Viertel einer Länge des Aktivteilsegments entspricht. Die Länge des Aktivteilsegments entspricht dem Abstand von der Mitte eines Zahns zu der Mitte des benachbarten Zahns in Bewegungsrichtung der elektrischen Maschine. Die Zähne sind dabei aus elektrisch gut leitfähigem Material, beispielsweise Eisen, welches sich gegenüber einem kapazitiven Sensor wie ein Material mit hoher Dielektrizitätskonstante verhält, während die Nuten mit Luft oder einer Vergussmasse mit niedriger Dielektrizitätskonstante gefüllt sind. Durch diese Anordnung der beiden Inkrementalmesseinheiten kann bei der Bewegung des ersten Aktivteils in Bezug zu dem zweiten Aktivteil durch die Inkrementalmesseinheiten jeweils ein im Wesentlichen sinusförmiges Ausgangssignal erzeugt werden, wobei die Signale der beiden Inkrementalmesseinheiten um 90° zueinander versetzt sind. Diese Signale können mit einer entsprechenden Sinus/Cosinus-Geberauswertung ausgewertet werden. Um die Sinusförmigkeit der Ausgangssignale der Inkrementalmesseinheiten zu verbessern, können in den Nuten entsprechende Materialien mit einer Dielektrizitätskonstante verwendet werden, die eine ortsabhängige Ausdehnung quer zur Bewegungsrichtung der elektrischen Maschine aufweisen. Diese Ortsabhängigkeit kann gezielt zur Verbesserung der Sinusförmigkeit angepasst werden. Somit kann der Abstand der Messeinrichtung zu einem der Zähne besonders genau bestimmt werden.

Um eine Beeinflussung der Sensorsignale der jeweiligen Sensoreinrichtung einer Messeinheit untereinander zu vermeiden, die dicht nebeneinander angeordnet sind, kann beispielsweise die Messung der einzelnen Sensoreinrichtungen zeitlich versetzt erfolgen. Ebenso ist es denkbar, dass die einzelnen Sensoreinrichtungen jeweils mit einer unterschiedlichen Frequenz betrieben werden, so dass kein elektromagnetisches Übersprechen zwischen den einzelnen Sensoreinrichtungen auftritt und somit die jeweiligen Positionsgebereinrichtungen besonders genau identifiziert werden können.

In einer weiteren Ausführungsform umfasst jede Positionsgebereinrichtung eine Mehrzahl von Inkrementalpositionseinheiten, die in Bewegungsrichtung der elektrischen Maschine hintereinander angeordnet sind, und die Messeinrichtung umfasst eine zweite Inkrementalmesseinrichtung, die mehrere kapazitive Sensoren umfasst. Um die Position des ersten Aktivteils der elektrischen Maschine in Bezug zu dem zweiten Aktivteil der elektrischen Maschine noch exakter bestimmen zu können, kann in jeder der Positionsgebereinrichtungen eine Mehrzahl von Inkrementalpositionseinheiten angeordnet werden. Die jeweiligen Inkrementalpositionseinheiten weisen eine zuvor festgelegte Dielektrizitätskonstante auf. Bevorzugt weisen die Materialien der jeweiligen Inkrementalpositionseinheiten zwei unterschiedliche Dielektrizitätskonstanten auf, wobei die Inkrementalpositionseinheiten in Bewegungsrichtung der elektrischen Maschine alternierend angeordnet sind. Somit kann mit Hilfe der zweiten Inkrementalmesseinrichtung die relative Lage der Messeinrichtung innerhalb eines Aktivteilsegmentes besonders genau bestimmt werden.

Bevorzugt ist die elektrische Maschine als Linearmotor ausgebildet, wobei die elektrische Maschine ein Primärteil als zweites Aktivelement und einen Sekundärteil als erstes Aktivelement umfasst. Somit kann durch die entsprechenden Positionsgebereinrichtungen in dem Sekundärteil des Linearmotors und der Messeinrichtung, die im Primärteil des Linearmotors angeordnet ist, auf besonders einfache Weise die Position des Sekundärteils in Bezug zu dem Primärteil bestimmt werden.

Schließlich wird erfindungsgemäß bereitgestellt ein Verfahren zum Bestimmen einer Position eines ersten Aktivteils einer elektrischen Maschine in Bezug zu einem zweiten Aktivteil der elektrischen Maschine, wobei das erste Aktivteil eine Mehrzahl von Aktivteilsegmenten umfasst, die in Bewegungsrichtung der elektrischen Maschine hintereinander angeordnet sind, und jedes der Aktivteilsegmente eine Positionsgebereinrichtung umfasst, und das zweite Aktivteil eine Messeinrichtung zum Identifizieren der jeweiligen Positionsgebereinrichtungen umfasst, wobei jede Positionsgebereinrichtung zumindest eine Positionsgebereinheit umfasst, wobei die zumindest eine Positionsgebereinheit in einem ersten der Aktivteilssegmente eine erste Dielektrizitätskonstante aufweist, und die zumindest eine Positionsgebereinheit in einem zum ersten benachbarten, zweiten Aktivteilssegment eine im Vergleich zur ersten unterschiedlichen, zweiten Dielektrizitätskonstante aufweist, wobei die Messeinrichtung zumindest eine Messeinheit umfasst, mit der Dielektrizitätskonstante der jeweiligen Positionsgebereinheit bestimmt wird.

Die vorliegend in Zusammenhang mit der elektrischen Maschine beschriebenen Weiterbildungen lassen sich ebenso auf das Verfahren zum Bestimmen einer Position eines ersten Aktivteils einer elektrischen Maschine in Bezug zu einem zweiten Aktivteil der elektrischen Maschine übertragen.

Die vorliegende Erfindung wird nun anhand der beigefügten Zeichnungen näher erläutert. Dabei zeigen:
- FIG 1: eine geschnittene Seitenansicht eines ersten Aktivteils einer elektrischen Maschine und einer Messeinrichtung;
- FIG 2: eine Draufsicht eines ersten Aktivelements einer elektrischen Maschine, in der eine Messeinrichtung dargestellt ist;
- FIG 3: eine Draufsicht gemäß FIG 2, in der die Messeinrichtung nicht dargestellt ist;
- FIG 4: eine Draufsicht gemäß FIG 2, in der eine erste Inkrementalmesseinrichtung dargestellt ist; und
- FIG 5: eine Draufsicht gemäß FIG 4, in der eine erste Inkrementalmesseinrichtung, eine zweite Inkrementalmesseinrichtung und zugehörige Inkrementalpositionseinheiten dargestellt sind.

Die nachfolgend näher geschilderten Ausführungsbeispiele stellen bevorzugte Ausführungsformen der vorliegenden Erfindung dar.

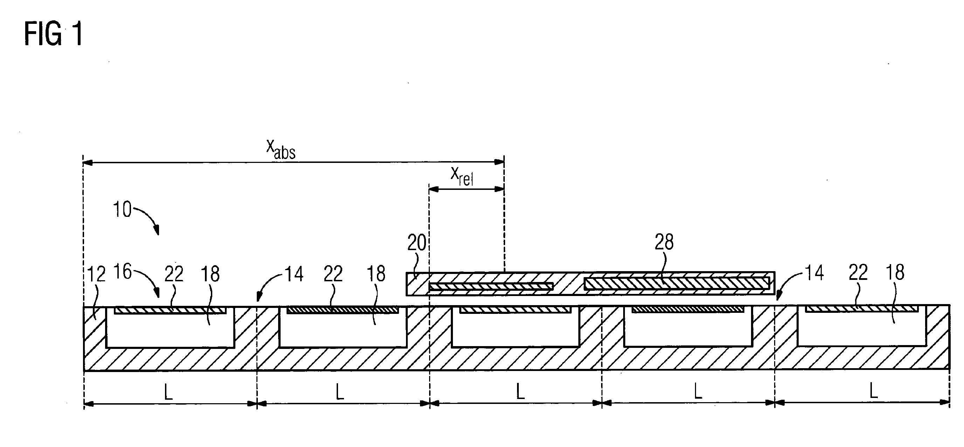

FIG 1 zeigt eine geschnittene Seitenansicht eines ersten Aktivteils 10 einer elektrischen Maschine und einer Messeinrichtung 20. Die elektrische Maschine ist vorliegend als Linearmotor ausgebildet, wobei das erste Aktivteil 10 der elektrischen Maschine einem Sekundärteil des Linearmotors entspricht. Das erste Aktivteil 10 der elektrischen Maschine umfasst eine Mehrzahl von Aktivteilsegmenten 12, die in Bewegungsrichtung der elektrischen Maschine hintereinander angeordnet sind. Das erste Aktivteil 10 ist vorliegend als periodische Struktur einer durch Zähne 14 voneinander getrennten Nuten 16 ausgebildet. Jedes der Aktivteilsegmente 12 umfasst eine entsprechende Positionsgebereinrichtung 18. Die Positionsgebereinrichtung 18 ist vorliegend in den Nuten 16 des ersten Aktivteils 10 der elektrischen Maschine angeordnet. Ebenso ist es denkbar, dass die Positionsgebereinrichtungen 18 auf den Zähnen 14 angeordnet sind. Hierbei darf die Höhe der Positionsgebereinrichtungen 18 die Breite des Luftspalts zwischen dem ersten Aktivteil 10 und dem zweiten Aktivteil nicht überschreiten.

Das zweite Aktivteil der elektrischen Maschine bzw. das Primärteil des Linearmotors ist vorliegend nicht dargestellt. Das zweite Aktivteil der elektrischen Maschine umfasst eine Messeinrichtung 20 zum Identifizieren der jeweiligen Positionsgebereinrichtung 18. Jede Positionsgebereinrichtung 18 umfasst zumindest eine Positionsgebereinheit 22.

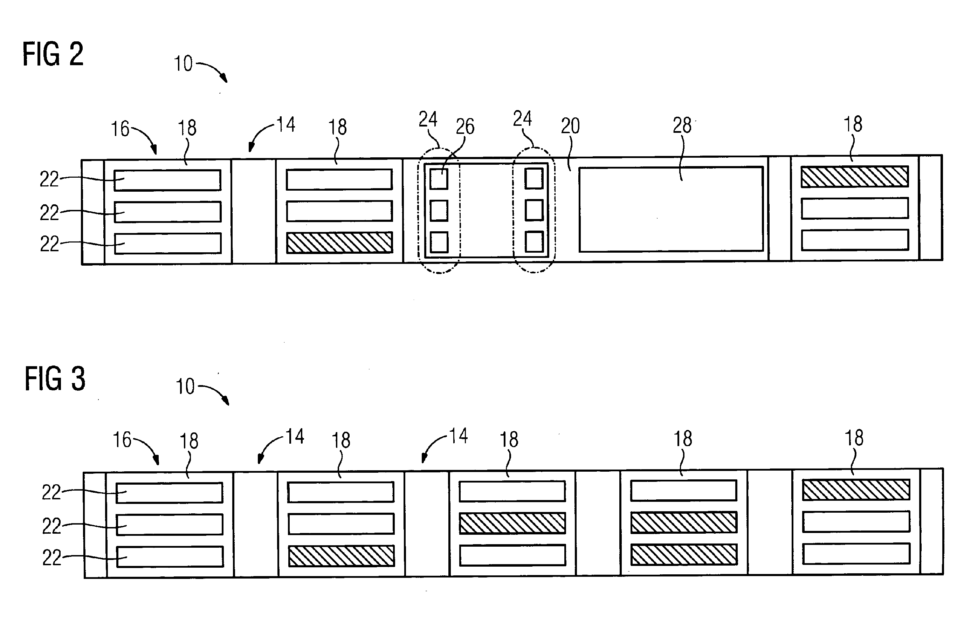

FIG 2 zeigt eine Draufsicht des ersten Aktivteils 10 der elektrischen Maschine gemäß FIG 1. Vorliegend umfasst jede Positionsgebereinrichtung 18 drei Positionsgebereinheiten 22, die in Bewegungsrichtung der elektrischen Maschine gesehen auf gleicher Höhe angeordnet sind. Dabei ist eine der Positionsgebereinheiten 22 aus einem ersten Material gefertigt, das eine erste Dielektrizitätskonstante aufweist und eine zweite Positionsgebereinrichtung aus einem zweiten Material gefertigt, dass eine zweite Dielektrizitätskonstante aufweist. Die Positionsgebereinheiten 22, die aus dem Material gefertigt sind, dass eine zweite Dielektrizitätskonstante aufweist, ist in den vorliegenden Figuren schraffiert dargestellt.

Durch die Anordnung der Positionsgebereinheiten 22 in der Positionsgebereinrichtung 18 kann eine entsprechende Codierung ermöglicht werden. Durch die vorliegende Verwendung von drei Positionsgebereinheiten 22 in einer Positionsgebereinrichtung 18, die zwei unterschiedliche Materialien mit zwei unterschiedlichen Dielektrizitätskonstanten aufweisen, können acht mögliche Anordnungen der Positionsgebereinheiten 22 erreicht werden. Hierbei ist es ebenso denkbar, mehrere Positionsgebereinheiten 22 in der Positionsgebereinrichtung 18 vorzusehen. Zudem kann eine Mehrzahl von unterschiedlichen Materialen für die jeweiligen Positionsgebereinheiten 22 verwendet werden, die jeweils unterschiedliche Dielektrizitätskonstanten aufweisen.

Die Messeinrichtung 20 umfasst zumindest zwei Messeinheiten 24 die in Bewegungsrichtung der elektrischen Maschine versetzt angeordnet sind. Durch die Verwendung von zwei in Bewegungsrichtung der elektrischen Maschine zueinander versetzt angeordneten Messeinheiten 24 kann garantiert werden, dass sich immer eine Messeinheit 24 über einer Positionsgebereinrichtung 18 befindet. Vorliegend umfasst die Messeinheit 24 drei Sensoreinrichtungen 26, die in Bewegungsrichtung der elektrischen Maschine gesehen auf gleicher Höhe angeordnet sind.

Die Sensoreinrichtungen 26 sind dabei so positioniert, dass sie bei einer Bewegung des ersten Aktivteils der elektrischen Maschine in Bezug zu dem zweiten Aktivteil der elektrischen Maschine über der entsprechenden Positionsgebereinheit 22 platziert sind. Die jeweiligen Sensoreinheiten 26 sind beispielsweise als kapazitive Näherungsschalter ausgebildet, um die jeweilige Dielektrizitätskonstante der Positionsgebereinrichtungen 22 identifizieren zu können. Somit kann mit einer der Messeinheiten 24 die entsprechende Anordnung der Positionsgebereinheiten 22 und die jeweiligen Dielektrizitätskonstanten der Positionsgebereinheiten 22 ermittelt werden.

Des Weiteren kann die Messeinrichtung 20 ein hier nicht dargestelltes Speicherelement umfassen, der die Codierung der jeweiligen Positionsgebereinrichtung 18 zusammen mit einer entsprechenden Positionsinformation gespeichert ist. Somit kann auf besonders einfache Weise bestimmt werden, über welcher der Positionsgebereinrichtungen 18 sich die Messeinrichtung 20 momentan befindet. Zudem umfasst die Messeinrichtung 20 ein entsprechendes Sensorelement 28 mit der eine relative Position Xᵣₑₗ bestimmt werden kann. Zu diesem Zweck kann das Sensorelement 28 beispielsweise als Reluktanzresolver oder als Hall-Sensor ausgebildet sein. Mittels der Messeinheit 24 kann bestimmt werden, über welcher Positionsgebereinrichtungen 18 sich die Messeinheit 20 und somit das zweite Aktivteil der Elektrischen Maschine momentan befindet. Zusammen mit der relativen Position Xᵣₑₗ kann die Absolutposition X_{abs} ermittelt werden.

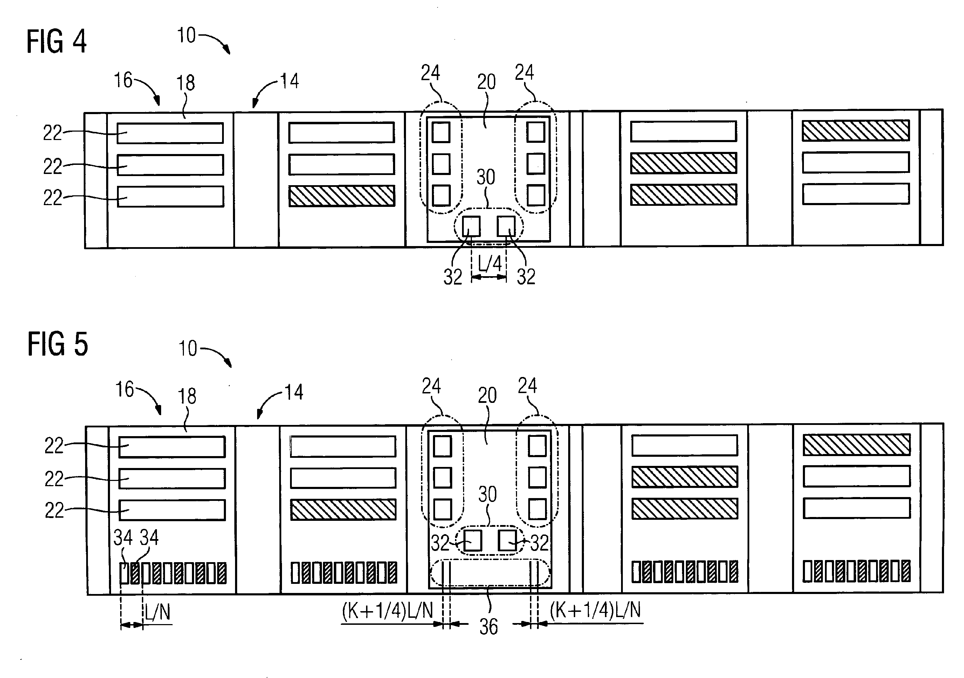

FIG 4 zeigt eine Draufsicht eines ersten Aktivteils 10 einer elektrischen Maschine gemäß FIG 2. Hierbei umfasst die Messeinrichtung 20 anstelle des Sensorelements 28 eine erste Inkrementalmesseinrichtung 30. Vorliegend umfasst die erste Inkrementalmesseinrichtung zwei Inkrementalmesseinheiten 32, die in Bewegungsrichtung der elektrischen Maschine zueinander versetzt angeordnet sind. Die Inkrementalmesseinheiten 32 können ebenso als kapazitive Sensoren ausgebildet sein. Bevorzugt weisen die beiden Inkrementalmesseinheiten 32 einen Abstand in Bewegungsrichtung der elektrischen Maschine zueinander auf, der ein Viertel einer Länge L eines Aktivteilsegments 12 entspricht. Somit entsteht bei einer Bewegung der Messeinrichtung 20 entlang des ersten Aktivteils 10 der elektrischen Maschine jeweils ein sinusförmiges Ausgangssignal. Das sinusförmige Ausgangssignal der beiden Inkrementalmesseinheiten 32 ist hierbei um 90° zueinander versetzt. Somit kann mittels der ersten Inkrementalmesseinrichtung 30 die relative Position Xᵣₑₗ bestimmt werden.

FIG 5 zeigt eine Draufsicht auf das erste Aktivteil 10 einer elektrischen Maschine gemäß FIG 4. Hierbei umfasst jede Positionsgebereinrichtung 18 eine Mehrzahl von Inkrementalpositionseinheiten 34, die in Bewegungsrichtung der elektrischen Maschine hintereinander angeordnet sind. Die jeweiligen Inkrementalpositionseinheiten 34 weisen unterschiedliche Dielektrizitätskonstanten auf. Bevorzugt weisen die Inkrementalpositionseinheiten 34 zwei unterscheidbare Dielektrizitätskonstanten auf, wobei die Inkrementalpositionseinheiten 34 mit unterschiedlichen Dielektrizitätskonstanten in Bewegungsrichtung der elektrischen Maschine alternierend angeordnet sind.

Die Messeinrichtung 20 weist eine zweite Inkrementalmesseinrichtung 36 auf. Die Inkrementalpositionseinheiten 34 sind hierbei periodisch angeordnet wobei die Periodenlänge L/N beträgt (mit N = 2, 3, 4...). Die zweite Inkrementalmesseinrichtung 36 umfasst vorliegend zwei voneinander in Bewegungsrichtung der elektrischen Maschine beabstandete Paare von kapazitiven Einzelsensoren. Die beiden kapazitiven Einzelsensoren eines solchen Paares sind um (K + 1/4) . L/N voneinander beabstandet (mit K = 0, 1, 2, ... N). Im dem in FIG 5 dargestellten Beispiel ist N = 8 und K = 0.

Somit ergeben sich an den Ausgängen der kapazitiven Einzelsensoren eines solchen Paares im Wesentlichen sinusförmige Signale, die um 90° zueinander versetzt sind. Vorliegend werden zwei Paare an kapazitiven Einzelsensoren verwendet, damit sichergestellt werden kann, dass sich eines der beiden Sensorpaare immer über einer oder einigen der Inkrementalpositionseinheiten 34 befindet.

Mit der Messeinrichtung 20, der ersten Inkrementalmesseinrichtung 30 und der zweiten Inkrementalmesseinrichtung 36 kann die Absolutposition X_{abs} des ersten Aktivteils der elektrischen Maschine in Bezug zu dem zweiten Aktivteil der elektrischen Maschine besonders effektiv und genau bestimmt werden.

## Patentansprüche

1. Elektrische Maschine mit
- einem ersten Aktivteil (10), das eine Mehrzahl von Aktivteilsegmenten (12) umfasst, die in Bewegungsrichtung der elektrischen Maschine hintereinander angeordnet sind, wobei
- jedes der Aktivteilsegmente (12) eine Positionsgebereinrichtung (18) umfasst, und
- einem zweiten Aktivteil mit einer Messeinrichtung (20) zum Identifizieren der jeweiligen Positionsgebereinrichtung (18),
**dadurch gekennzeichnet, dass**
- jede Positionsgebereinrichtung (18) zumindest eine Positionsgebereinheit (22) umfasst, wobei
- die zumindest eine Positionsgebereinheit (22) in einem ersten der Aktivteilsegmente (12) eine erste Dielektrizitätskonstante aufweist, und
- die zumindest eine Positionsgebereinheit (22) in einem zum ersten benachbarten, zweiten Aktivteilsegment (12) eine im Vergleich zur ersten unterschiedliche, zweite Dielektrizitätskonstante aufweist, wobei
- die Messeinrichtung (20) zumindest eine Messeinheit (24) umfasst, mit der die Dielektrizitätskonstante der jeweiligen Positionsgebereinheit (22) bestimmbar ist.

2. Elektrische Maschine nach Anspruch 1,
**dadurch gekennzeichnet, dass** die Messeinrichtung (20) zumindest zwei Messeinheiten (24) umfasst, die in Bewegungsrichtung der elektrischen Maschine in einem solchen Abstand zueinander angeordnet sind, dass für jede Lage des ersten Aktivteils in Bezug zu dem zweiten Aktivteil (10) immer zumindest eine der Messeinheiten (24) über einer der Positionsgebereinrichtungen (18) positioniert ist.

3. Elektrische Maschine nach Anspruch 1 oder 2,
**dadurch gekennzeichnet, dass**
- jede Positionsgebereinrichtung (18) zumindest zwei Positionsgebereinheiten (22) umfasst, die in Bewegungsrichtung der elektrischen Maschine gesehen auf gleicher Höhe angeordnet sind, und
- jede Messeinheit (20) zumindest zwei Sensoreinrichtungen (26) umfasst, wobei jeder Positionsgebereinheit (22) eine jeweilige Sensoreinrichtung (26) zugeordnet ist.

4. Elektrischen Maschine nach einem der vorhergehenden Ansprüche,
**dadurch gekennzeichnet, dass** das erste Aktivteil eine periodische Struktur einer durch Zähnen (14) voneinander abgetrennten Nuten (16) aufweist.

5. Elektrische Maschine nach Anspruch 4,
**dadurch gekennzeichnet, dass** die Messeinrichtung (20) eine erste Inkrementalmesseinrichtung (30) zur Positionsbestimmung des ersten Aktivteils (10) in Bezug zu dem zweiten Aktivteil umfasst.

6. Elektrische Maschine nach Anspruch 5,
**dadurch gekennzeichnet, dass** die erste Inkrementalmesseinrichtung (30) zumindest zwei als kapazitive Sensoren ausgeführte Inkrementalmesseinheiten (30) umfasst, die in Bewegungsrichtung der elektrischen Maschine einen Abstand zueinander aufweisen, der einem Viertel einer Länge des Aktivteilteilsegments (12) entspricht.

7. Elektrische Maschine nach einem der vorhergehenden Ansprüche,
**dadurch gekennzeichnet, dass**
- jede Positionsgebereinrichtung (18) eine Mehrzahl von Inkrementalpositionseinheiten (34) umfasst, die in Bewegungsrichtung der elektrischen Maschine hintereinander angeordnet sind, und
- die Messeinrichtung (20) eine zweite Inkrementalmesseinrichtung (36) umfasst.

8. Elektrische Maschine nach einem der vorhergehenden Ansprüche, die als Linearmotor ausgebildet ist, mit
- einem Primärteil als zweites Aktivelement, und
- einem Sekundärteil als erstes Aktivelement (10).

9. Verfahren zum Bestimmen einer Position eines ersten Aktivteils (10) einer elektrischen Maschine in Bezug zu einem zweiten Aktivteil der elektrischen Maschine, wobei
- das erste Aktivteil (10) eine Mehrzahl von Aktivteilsegmenten (12) umfasst, die in Bewegungsrichtung der elektrischen Maschine hintereinander angeordnet sind, und
- jedes der Aktivteilsegmente (12) eine Positionsgebereinrichtung (18) umfasst, und
- das zweite Aktivteil eine Messeinrichtung (20) zum Identifizieren der jeweiligen Positionsgebereinrichtung (18) umfasst,
**dadurch gekennzeichnet, dass**
- jede Positionsgebereinrichtung (18) zumindest eine Positionsgebereinheit (22) umfasst, wobei
- die zumindest eine Positionsgebereinheit (22) in einem ersten der Aktivteilsegmente (12)eine erste Dielektrizitätskonstante aufweist, und
- die zumindest eine Positionsgebereinheit (22) in einem zum ersten benachbarten, zweiten Aktivteilsegment (12) eine im Vergleich zur ersten unterschiedliche, zweite Dielektrizitätskonstante aufweist, wobei
- die Messeinrichtung (20) zumindest eine Messeinheit (24) umfasst, mit der die Dielektrizitätskonstante der jeweiligen Positionsgebereinheit (22) bestimmt wird.

## Claims

1. Electric machine having
- a first active part (10), which comprises a plurality of active part segments (12) which are disposed one behind the other in the direction of movement of the electric machine, wherein
- each of the active part segments (12) comprises a position measuring device (18), and
- a second active part with a measuring device (20) for identifying the respective position measuring device (18),
c h a r a c t e r i s e d i n that
- each position measuring device (18) comprises at least one position measuring unit (22), wherein
- the at least one position measuring unit (22) has, in a first of the active part segments (12), a first dielectric constant, and
- the at least one position measuring unit (22) has, in a second active part segment (12) adjacent to the first one, a second dielectric constant different in comparison to the first one, wherein
- the measuring device (20) comprises at least one measuring unit (24) with which the dielectric constant of the respective position measuring unit (22) can be determined.

2. Electric machine according to claim 1,
**characterised in that**
the measuring device (20) comprises at least two measuring units (24) which are disposed apart from one another in the direction of movement of the electric machine such that for each position of the first active part relative to the second active part (10) at least one of the measuring units (24) is always positioned over one of the position measuring devices (18).

3. Electric machine according to claim 1 or 2,
**characterised in that**
- each position measuring device (18) comprises at least two position measuring units (22) which are disposed at the same height when viewed in the direction of movement of the electric machine, and
- each measuring unit (20) comprises at least two sensor devices (26), each position measuring unit (22) being assigned a respective sensor device (26).

4. Electric machine according to one of the preceding claims,
**characterised in that**
the first active part has a periodic structure of grooves (16) separated from one another by teeth (14).

5. Electric machine according to claim 4,
**characterised in that**
the measuring device (20) comprises a first incremental measuring device (30) for determining the position of the first active part (10) relative to the second active part.

6. Electric machine according to claim 5,
**characterised in that**
the first incremental measuring device (30) comprises at least two incremental measuring units (30), embodied as capacitive sensors, which are spaced a quarter of a length of the active part segment (12) apart from one another in the direction of movement of the electric machine.

7. Electric machine according to one of the preceding claims,
**characterised in that**
- each position measuring device (18) comprises a plurality of incremental position units (34) which are disposed one behind the other in the direction of movement of the electric machine, and
- the measuring device (20) comprises a second incremental measuring device (36).

8. Electric machine according to one of the preceding claims, which is embodied as a linear motor, having
- a primary part as a second active element, and
- a secondary part as a first active element (10).

9. Method for determining a position of a first active part (10) of an electric machine relative to a second active part of the electric machine, wherein
- the first active part (10) comprises a plurality of active part segments (12) which are disposed one behind the other in the direction of movement of the electric machine, and
- each of the active part segments (12) comprises a position measuring device (18), and
- the second active part comprises a measuring device (20) for identifying the respective position measuring device (18),
**characterised in that**
- each position measuring device (18) comprises at least one position measuring unit (22), wherein
- the at least one position measuring unit (22) has, in a first of the active part segments (12), a first dielectric constant, and
- the at least one position measuring unit (22) has, in a second active part segment (12) adjacent to the first one, a second dielectric constant different in comparison to the first one, wherein
- the measuring device (20) comprises at least one measuring unit (24) with which the dielectric constant of the respective position measuring unit (22) is determined.

## Revendications

1. Machine électrique comprenant
- une première partie ( 10 ) active qui comprend une multiplicité de sous-segments ( 12 ) actifs qui sont disposés les uns derrières les autres dans la direction de déplacement de la machine électrique, dans laquelle
- chacun des sous-segments ( 12 ) actifs comprend un dispositif (18) d'indication de position, et
- une deuxième partie active ayant un dispositif ( 20 ) de mesure pour l'identification du dispositif ( 18 ) respectif d'indication de position,
**caractérisée en ce que**
- chaque dispositif ( 18 ) d'indication de position comprend au moins une unité ( 22 ) d'indication de position, dans laquelle
- la au moins une unité ( 22 ) d'indication de position a une première constante diélectrique dans un premier des sous-segments ( 12 ) actifs et
- la au moins une unité ( 22 ) d'indication de position a, dans un deuxième sous-segment actif voisin du premier, une deuxième constante diélectrique différente de la première, dans laquelle
- le dispositif ( 20 ) de mesure comprend au moins une unité ( 24 ) de mesure, par laquelle la constante diélectrique de l'unité ( 22 ) respective d'indication de position, peut être déterminée.

2. Machine électrique suivant la revendication 1,
**caractérisée en ce que**
le dispositif ( 20 ) de mesure comprend au moins deux unités ( 24 ) de mesure qui sont disposées dans la direction de déplacement de la machine électrique à une distance telle l'une de l'autre que, pour chaque position de la première partie active par rapport à la deuxième partie ( 10 ) active, au moins l'une des unités ( 24 ) de mesure est toujours en position au-dessus de l'un des dispositifs ( 18 ) d'indication de position.

3. Machine électrique suivant l'une des revendications 1 ou 2, **caractérisée en ce que**
- chaque dispositif ( 18 ) d'indication de position comprend au moins deux unités ( 22 ) d'indication de position, qui sont considéré dans la direction de déplacement de la machine électrique, disposées au même niveau, et
- chaque unité ( 20 ) de mesure comprend au moins deux dispositifs ( 26 ) formant capteur, un dispositif ( 26 ) respectif formant capteur étant associé à chaque unité ( 22 ) d'indication de position.

4. Machine électrique suivant l'une des revendications précédentes,
**caractérisée en ce que**
la première partie active a une structure périodique de rainures ( 16 ) séparées les unes des autres par des dents ( 14 ).

5. Machine électrique suivant la revendication 4,
**caractérisée en ce que** le dispositif ( 20 ) de mesure comprend un premier dispositif de mesure d'incrément pour la détermination de la position de la première partie ( 10 ) active par rapport à la deuxième partie active.

6. Machine électrique suivant la revendication 5,
**caractérisée en ce que**
le premier dispositif ( 30 ) de mesure d'incrément comprend au moins deux unités ( 30 ) de mesure d'incrément réalisées sous la forme de capteurs capacitifs qui ont, dans la direction de déplacement de la machine électrique, une distance entre elles qui correspond à un quart d'une longueur du sous-segment ( 12 ) de la partie active.

7. Machine électrique suivant l'une des revendications précédentes,
**caractérisée en ce que**
- chaque dispositif ( 18 ) d'indication de position comprend une multiplicité d'unités ( 34 ) de position d'incrément, qui sont disposées les unes derrières les autres dans la direction de déplacement de la machine électrique, et
- le dispositif ( 20 ) de mesure comprend un deuxième dispositif ( 36 ) mesure d'incrément.

8. Machine électrique suivant l'une des revendications précédentes qui est constitué en moteur linéaire comprenant
- une partie primaire comme deuxième élément actif, et
- une partie secondaire comme première élément ( 10 ) actif.

9. Procédé de détermination d'une position d'une première partie ( 10 ) active d'une machine électrique par rapport à une deuxième partie active de la machine électrique, dans lequel
- la première partie ( 10 ) active comprend une multiplicité de sous-segments ( 12 ) actifs qui sont disposés les uns derrière les autres dans la direction de déplacement de la machine électrique, et
- chacun des sous-segments ( 12 ) actifs comprend un dispositif ( 18 ) d'indication de position, et
- la deuxième partie active comprend un dispositif ( 20 ) de mesure pour l'identification du dispositif ( 18 ) respectif d'indication de position,
**caractérisé en ce que**
- chaque dispositif ( 18 ) d'indication de position comprend au moins une unité ( 22 ) d'indication de position, dans lequel
- la au moins une unité ( 22 ) d'indication de position a une première constante diélectrique dans un premier des sous-segments ( 12 ) actifs, et
- la au moins une unité ( 22 ) d'indication de position a, dans un deuxième sous-segment ( 12 ) actif voisin du premier, une deuxième constante diélectrique différente de la première, dans lequel
- le dispositif ( 20 ) de mesure comprend au moins une unité ( 24 ) de mesure, par laquelle la constante diélectrique de l'unité ( 22 ) respective d'indication de position est déterminée.
